# EUROPÄISCHE PATENTSCHRIFT

(11) **EP 1 227 435 B1**
(45) Veröffentlichungstag und Bekanntmachung des Hinweises auf die Patenterteilung: **24.09.2008**
(21) Anmeldenummer: 01127097.2
(22) Anmeldetag: 15.11.2001
(51) Int. Cl.: G06K 19/077

(54) **Dünne elektronische Chipkarte mit Energiespeicher**
Thin electronic chip card with energy storage means
Carte à puce mince et électronique à accumulateur d'énergie

(30) Priorität: 18.01.2001 DE 10102125
(43) Veröffentlichungstag der Anmeldung: 31.07.2002
(73) Patentinhaber: VARTA Microbattery GmbH, 30419 Hannover (DE)
(72) Erfinder: Holl, Konrad, Dr., 73434 Aalen-Dewangen (DE); Joas, Alfons, 73479 Tannhausen (DE); Wagner, Horst, 73494 Rosenberg (DE); Ilic, Dejan, Dr., 73479 Ellwangen (DE)
(74) Vertreter: Patentanwälte Ruff, Wilhelm, Beier, Dauster & Partner

(56) Entgegenhaltungen:
- EP-A- 0 244 750
- US-A- 5 920 177
- PATENT ABSTRACTS OF JAPAN vol. 1996, no. 09, 30. September 1996 (1996-09-30) & JP 08 138022 A (TOSHIBA CORP), 31. Mai 1996 (1996-05-31)
- PATENT ABSTRACTS OF JAPAN vol. 2000, no. 02, 29. Februar 2000 (2000-02-29) & JP 11 328036 A (NIPPON TELEGR &TELEPH CORP <NTT>), 30. November 1999 (1999-11-30)

## Beschreibung

Gegenstand der Erfindung ist eine dünne elektronische Chipkarte mit einem IC-Chip und einem flachen Energiespeicher zur Stromversorgung des IC-Chips.

Elektronische Chipkarten besitzen überwiegend keinen eigenen Energiespeicher. Sie sind in Form von Kreditkarten, Telefonkarten, Mitgliedskarten etc. bekannt. Mittels Magnetstreifen oder Kontakt-Chipmodul können Informationen wiedergeben oder gespeichert werden. Neben diesen Karten existieren kontaktlose Chipkarten. Derartige Karten besitzen eine Antennenspule und können in einem elektromagnetischen Feld mittels Induktion aktiviert werden. Wegen der maximal zulässigen elektromagnetischen Feldstärken sind allerdings die Reichweiten solcher Karten nur gering. Sie liegen üblicherweise im Bereich von weniger als ca. 50 cm. Derartige Karten sind sogenannte passive Karten, d.h. Informationen können nur mittels eines Kontaktterminals oder in elektromagnetischen Feldern gelesen oder beschrieben werden.

Passive Karten haben den Nachteil, dass sie nur für bestimmte Anwendungen einsetzbar sind, da sie keine eigene Energieversorgung besitzen. Erst der Einbau eines eigenen Energiespeichers, insbesondere eines galvanischen Elements, ermöglicht eine Vielzahl von Anwendungen, da eine größere Zuverlässigkeit und Sicherheit erreicht wird und größere Datenmengen gespeichert werden können. Als Energiespeicher kommen Kondensatoren und insbesondere sehr dünne Knopfzellen oder rechteckige Flachzellen in Betracht, die in die aus Kunststofflaminaten bestehende Karte eingebaut werden. Chipkarten mit Energiespeicher sind z.B. aus der EP 0 244 750 bekannt, die auch die Grundlage für den Oberbegriff des Anspruchs 1 bildet.

Allerdings ist die mechanische Stabilität solcher Chipkarten gegenüber Biege- und Druckbeanspruchungen meist nicht ausreichend, solche Beanspruchungen führen zu irreversiblen Verformungen und Schäden, insbesondere der Energiespeicher. Beispielsweise kommt es zu Schäden entlang der Kante des in die Karte einlaminierten Energiespeichers. Durch eine in diesem Bereich auftretende Rissbildung kann es zu Fehlfunktionen der Karte kommen, da beispielsweise der Magnetstreifen nicht mehr sicher abgetastet werden kann, oder eine Rissbildung kann zur Beschädigung der Leiterbahnen führen, sodass es zum Ausfall von Funktionen der Chipkarte kommt.

Der Erfindung liegt die Aufgabe zugrunde, eine dünne elektronische Chipkarte der eingangs genannten Art anzugeben, welche hohe Stabilität gegenüber Biege- und Druckbeanspruchung besitzt, und bei der eine irreversible Verformung durch Biegebeanspruchung weitestgehend vermieden wird.

Diese Aufgabe wird erfindungsgemäß bei einer Chipkarte der eingangs genannten Art durch die Merkmale des kennzeichnenden Teils des Anspruchs 1 gelöst. Vorteilhafte Ausgestaltungen der erfindungsgemäßen Chipkarte sind in den Unteransprüchen angegeben.

Gemäß der Erfindung ist zwischen der üblichen äußeren Abdeckfolie und dem Energiespeicher zumindest auf einer Seite eine zusätzliche hochfeste Folie angeordnet, die zumindest einen Teil der Oberfläche des Energiespeichers überdeckt und über dessen Umriss herausragt. Diese zusätzliche Folie aus einem faserverstärktem Material besitzt eine hohe Festigkeit und verhindert eine besonders starke Belastung an den Kanten der Batterie mit dadurch möglicher Rissbildung bei Biegebeanspruchung der Karte. Die äußere Abdeckfolie der Chipkarte besteht beispielsweise aus Polystyrol, ABS, Polyamid, Polypropylen oder anderen Polymer-Kunststofflaminaten. Die zusätzliche Folie besteht aus faserverstärktem Kunststoffverbundmaterial, beispielsweise faserverstärktem Polyäthylen, faserverstärktem Polypropylen, glasfaserverstärktem Polyester oder einem Kohlefaserverbundwerkstoff. Vorzugsweise bedeckt die zusätzliche Folie die Oberfläche des Energiespeichers vollständig und ragt allseitig über dessen Umriss heraus und ist gegebenenfalls auf beiden Oberflächen des Energiespeichers vorgesehen. Die zusätzliche hochfeste Folie kann mit der Oberfläche des Energiespeichers durch Kleben oder Heißlaminieren fest verbunden oder auch lose sein. Vorteilhaft ist es, etwaige Hohlräume, insbesondere in der Umgebung des Energiespeichers, mit elastischen Ausgleichsmassen, beispielsweise Elastomeren, insbesondere Silicon, auszufüllen.

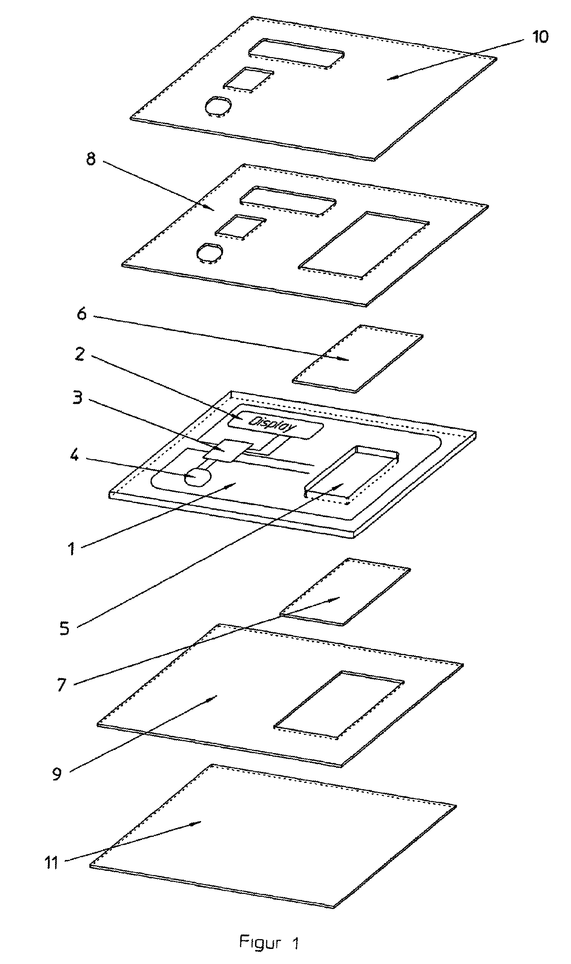

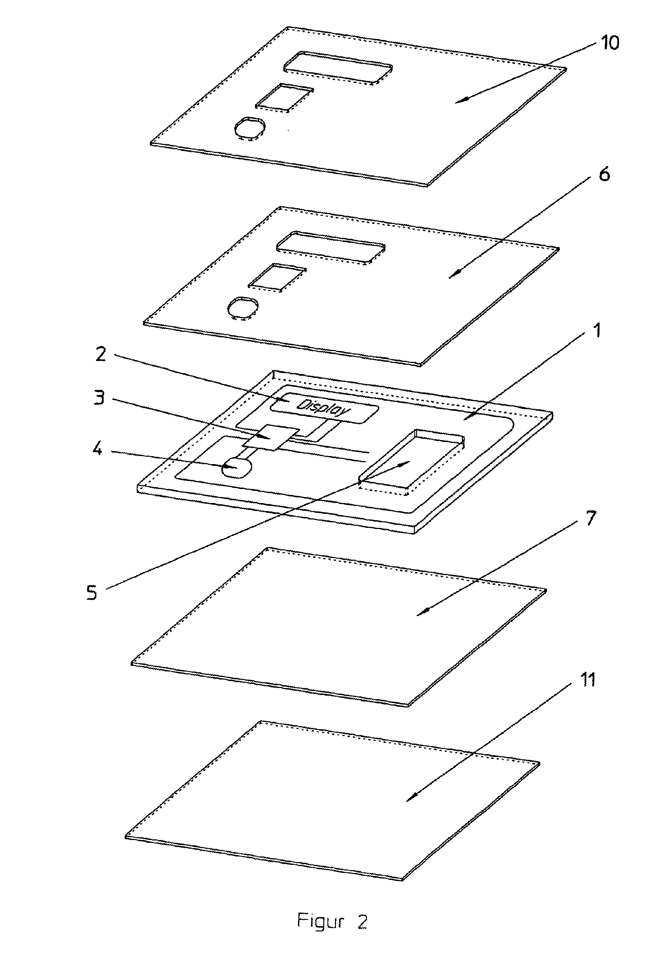

Im folgenden ist der Gegenstand der Erfindung anhand der Figuren 1 und 2 näher erläutert. In eine eigentliche Trägerfolie mit nicht näher dargestellten Leiterbahnen ist ein Display 2, das Chipmodul 3, ein Druckschalter 4 und ein Energiespeicher 5 eingelassen. Der Energiespeicher 5 kann dabei ein galvanisches Element oder ein Kondensator sein, bevorzugt ist ein galvanisches Element in Form eines primären oder sekundären Lithium/Metalloxidsystems. Beispielsweise ist das System Li oder Li-Legierung / MnO₂ geeignet. Erfindungsgemäß ist auf die Oberseite des Energiespeichers 5 eine hochfeste Folie aufgebracht oder auflaminiert. In der dargestellten Ausführungsform ist auf der Unterseite des Energiespeichers 5 ebenfalls eine hochfeste Folie 6 vorgesehen. bzw. auflaminiert. Darauf aufgebracht ist eine Ausgleichsfolie 8, die Aussparungen für Display 2, Chipmodul 3 und Druckknopf 4 sowie für die zusätzliche hochfeste Folie 6 enthält. Die Ausgleichsfolie 9, die auf der Unterseite des Energiespeichers vorgesehen ist, enthält lediglich eine Aussparung für die zusätzliche hochfeste Folie 7. Schließlich ist die Oberseite dieses Verbunds durch eine Overlay-Folie 10 und die Unterseite durch die Underlay-Folie 11 abgedeckt. Alle Folien können fest miteinander durch Laminieren und Kalt- oder Heißkleber verbunden sein.

Die zusätzliche hochfeste Folie 6 kann den gesamten Energiespeicher 5 an allen Seiten überdecken, sie kann aber auch lediglich in Form von Streifen vorgesehen sein, die die Fläche des Energiespeichers nicht ganz abdecken, die jedoch zumindest Teilbereiche überdecken und in diesen Bereichen über den Umriss des Energiespeichers 5 hinausragen. Grundsätzlich ist es auch möglich, die zusätzliche hochfeste Folie 6 so auszubilden, dass sie nicht nur den Energiespeicher überdeckt, sondern sich über die gesamte Chipkarte erstreckt, wie dies aus Figur 2 ersichtlich ist. Es ist möglich, die zusätzliche hochfeste Folie auf einer Seite des Energiespeichers 5 oder aber auf beiden Seiten des Energiespeichers 5 anzubringen. Wenn beiderseits des Energiespeichers solche Folien angeordnet sind, bilden die Zusatzfolien praktisch ein zusätzliches Gehäuse für den Energiespeicher, so dass die Funktionsfähigkeit des Energiespeichers 5 über lange Zeiträume gesichert wird.

Eine Chipkarte im ID1-Format der ISO-Norm 7810 hat die Abmessungen: Breite ca. 54 mm x Länge ca. 85,6 mm und besitzt eine Gesamtdicke von ca. 760 bis ± 80 µm. Der in die Chipkarte eingebrachte Energiespeicher besitzt eine Dicke, die ca. 400 µm beträgt. Auf diesen Energiespeicher sind die zusätzlichen hochfesten Folien aufgebracht, die eine Dicke von ca. 50 µm besitzen. Im Falle einer Klebe- oder Laminationsschicht zwischen hochfester Folie 6 und Energiespeicher 5 beträgt die Dicke der Klebe- oder Laminationsschicht bis zu ca. 50 µm. Auf diesen Verbund sind Ausgleichsfolie 8, 9 und äußere Abdeckfolien 10, 11, die beispielsweise aus PVC, ABS, Polystyrol oder Polypropylen bestehen, auflaminiert, so dass die oben genannte Gesamtdicke von maximal 840 µm nicht überschritten wird.

Selbstverständlich ist der Gegenstand der Erfindung auch für Chipkarten anwendbar, die andere Abmessungen aufweisen, beispielsweise mit Abmessungen von bis zu 100 mm x 150 mm x 2,0 mm. Solche Chipkarten können beispielsweise als flexible und kontaktlose Identifikationssysteme fungieren, wo größere Reichweiten und damit größere Energiespeicher benötigt werden.

## Patentansprüche

1. Dünne elektronische Chipkarte mit einem IC-Chip und einem flachen Energiespeicher zur Stromversorgung des IC-Chips, **dadurch gekennzeichnet, dass** der IC-Chip (3) und der Energiespeicher (5) in eine Trägerfolie (1) eingelassen sind und dass zwischen äußeren Abdeckfolien (10, 11) und dem Energiespeicher (5) zumindest einseitig eine zusätzliche hochfeste Folie (6) aus faserverstärktem Kunststoff angeordnet ist, die die Oberfläche des Energiespeichers (5) wenigstens teilweise überdeckt und über dessen Umriss herausragt.

2. Dünne elektronische Chipkarten nach Anspruch 1, **dadurch gekennzeichnet, dass** die zusätzliche hochfeste Folie (6) die Oberfläche des Energiespeichers (5) vollständig bedeckt und allseitig über dessen Umriss herausragt.

3. Dünne elektronische Chipkarte nach Anspruch 1 oder Anspruch 2, **dadurch gekennzeichnet, dass** die zusätzliche hochfeste Folie (6, 7) auf beiden Oberflächen des Energiespeichers (5) vorgesehen ist.

4. Dünne elektronische Chipkarte nach einem der Ansprüche 1 bis 3, **dadurch gekennzeichnet, dass** die zusätzliche hochfeste Folie (6, 7) mit der Oberfläche des Energiespeichers (5) durch Kleben oder Heißlaminieren fest verbunden ist.

5. Dünne elektronische Chipkarte nach einem der Ansprüche 1 bis 4, **dadurch gekennzeichnet, dass** Hohlräume in der Umgebung des Energiespeichers (5) mit elastischer Ausgleichsmasse ausgefüllt sind.

6. Dünne elektronsiche Chipkarte nach einem oder mehreren der Ansprüche 1 bis 5, **dadurch gekennzeichnet, dass** die zusätzliche hochfeste Folie (6, 7) eine Dicke von 20 bis 100 µm, vorzugsweise von 20 bis 60 µm, besitzt.

7. Dünne elektronische Chipkarte nach einem oder mehreren der Ansprüche 1 bis 6, **dadurch gekennzeichnet, dass** die Folie (6, 7) aus faserverstärktem Polyäthylen, faserverstärktem Polypropylen, glasfaserverstärktem Polyester oder einem Kohlefaserverbundwerkstoff besteht.

8. Dünne elektronische Chipkarte nach einem oder mehreren der Ansprüche 1 bis 7, **dadurch gekennzeichnet, dass** zwischen äußerer Abdeckfolie (10, 11) und zusätzlicher hochfester Folie (6, 7) eine Ausgleichsfolie (8, 9) angeordnet ist, die die gleiche Dicke wie die zusätzliche hochfeste Folie (6, 7) besitzt und die mit einer Ausnehmung versehen ist, deren Größe der Fläche der zusätzlichen Folie (6, 7) entspricht.

9. Dünne elektronische Chipkarte nach einem oder mehreren der Ansprüche 1 bis 8, **dadurch gekennzeichnet, dass** der Energiespeicher (5) ein galvanisches Element, vorzugsweise ein Primärelement mit negative Elektrode aus Lithiummetall oder einer Lithiummetall-Legierung ist.

10. Dünne elektronische Chipkarte nach einem der Ansprüche 1 bis 8, **dadurch gekennzeichnet, dass** der Energiespeicher (5) eine wiederaufladbare Lithium-Ionenzelle ist.

## Claims

1. Thin electronic chip card with an IC chip and a flat energy storage means for supplying current to the IC chip, **characterized in that** the IC chip (3) and the energy storage means (5) are recessed in a backing film (1) and **in that** arranged between the outer covering films (10, 11) and the energy storage means (5) there is, at least on one side, an additional high-strength film (6) of fibre-reinforced plastic, which at least partially covers over the surface of the energy storage means (5) and protrudes beyond the outline of the latter.

2. Thin electronic chip card according to Claim 1, **characterized in that** the additional high-strength film (6) completely covers the surface of the energy storage means (5) and protrudes beyond the outline of the latter on all sides.

3. Thin electronic chip card according to Claim 1 or Claim 2, **characterized in that** the additional high-strength film (6, 7) is provided on both surfaces of the energy storage means (5).

4. Thin electronic chip card according to one of Claims 1 to 3, **characterized in that** the additional high-strength film (6, 7) is firmly connected to the surface of the energy storage means (5) by adhesive bonding or hot lamination.

5. Thin electronic chip card according to one of Claims 1 to 4, **characterized in that** cavities in the surrounding area of the energy storage means (5) are filled with elastic compensating compound.

6. Thin electronic chip card according to one or more of Claims 1 to 5, **characterized in that** the additional high-strength film (6, 7) has a thickness of 20 to 100 µm, preferably of 20 to 60 µm.

7. Thin electronic chip card according to one or more of Claims 1 to 6, **characterized in that** the film (6, 7) consists of fibre-reinforced polyethylene, fibre-reinforced polypropylene, glass-fibre-reinforced polyester or a carbon-fibre composite material.

8. Thin electronic chip card according to one or more of Claims 1 to 7, **characterized in that** arranged between the outer covering film (10, 11) and the additional high-strength film (6, 7) is a compensating film (8, 9), which has the same thickness as the additional high-strength film (6, 7) and is provided with a clearance, the size of which corresponds to the surface area of the additional film (6, 7).

9. Thin electronic chip card according to one or more of Claims 1 to 8, **characterized in that** the energy storage means (5) is a galvanic element, preferably a primary element with a negative electrode of lithium metal or a lithium metal alloy.

10. Thin electronic chip card according to one of Claims 1 to 8, **characterized in that** the energy storage means (5) is a rechargeable lithium-ion cell.

## Revendications

1. Carte à puce électronique mince comprenant une puce de circuit intégré et un accumulateur d'énergie plat pour l'alimentation électrique de la puce de circuit intégré, **caractérisée en ce que** la puce de circuit intégré (3) et l'accumulateur d'énergie (5) sont encastrés dans un film porteur (1) et qu'entre des films de protection extérieurs (10, 11) et l'accumulateur d'énergie (5) est disposé au moins d'un côté un film à haute résistance supplémentaire (6) en matière plastique renforcée de fibres qui recouvre au moins partiellement la surface de l'accumulateur d'énergie (5) et qui dépasse de son pourtour.

2. Cartes à puce électroniques minces selon la revendication 1, **caractérisées en ce que** le film à haute résistance supplémentaire (6) recouvre entièrement la surface de l'accumulateur d'énergie (5) et dépasse de tous les côtés de son pourtour.

3. Carte à puce électronique mince selon la revendication 1 ou la revendication 2, **caractérisée en ce que** le film à haute résistance supplémentaire (6, 7) est prévu sur les deux surfaces de l'accumulateur d'énergie (5).

4. Carte à puce électronique mince selon l'une des revendications 1 à 3, **caractérisée en ce que** le film à haute résistance supplémentaire (6, 7) est fixé à demeure à la surface de l'accumulateur d'énergie (5) par collage ou laminage à chaud.

5. Carte à puce électronique mince selon l'une des revendications 1 à 4, **caractérisée en ce que** les espaces creux dans l'entourage de l'accumulateur d'énergie (5) sont remplis d'une masse de compensation souple.

6. Carte à puce électronique mince selon une ou plusieurs des revendications 1 à 5, **caractérisée en ce que** le film à haute résistance supplémentaire (6, 7) présente une épaisseur de 20 à 100 µm, de préférence de 20 à 60 µm.

7. Carte à puce électronique mince selon une ou plusieurs des revendications 1 à 6, **caractérisée en ce que** le film (6, 7) se compose de polyéthylène renforcé de fibres, de polypropylène renforcé de fibres, de polyester renforcé de fibres de verre ou d'un matériau composite à base de fibres de carbone.

8. Carte à puce électronique mince selon une ou plusieurs des revendications 1 à 7, **caractérisée en ce qu'**entre le film de protection extérieur (10, 11) et le film à haute résistance supplémentaire (6, 7) est disposé un film de compensation (8, 9) qui présente la même épaisseur que le film à haute résistance supplémentaire (6, 7) et qui est muni d'un évidement dont la taille correspond à la surface du film supplémentaire (6, 7).

9. Carte à puce électronique mince selon une ou plusieurs des revendications 1 à 8, **caractérisée en ce que** l'accumulateur d'énergie (5) est un élément galvanique, de préférence un élément primaire avec une électrode négative en lithium métallique ou alliage de lithium métallique.

10. Carte à puce électronique mince selon l'une des revendications 1 à 8, **caractérisée en ce que** l'accumulateur d'énergie (5) est une pile au lithium rechargeable.
